# EUROPEAN PATENT APPLICATION

(11) **EP 2 746 660 A1**
(43) Date of publication of application: **25.06.2014**
(21) Application number: 13170809.1
(22) Date of filing: 06.06.2013
(51) Int. Cl.: F23D 14/24, F23D 14/32

(54) **Method and apparatus for providing oxygen enriched fuel**

(30) Priority: 19.12.2012 US 201261739180 P; 14.03.2013 US 201313803577
(71) Applicant: Linde Aktiengesellschaft, 80331 München (DE)
(72) Inventor: Simpson, Neil G., Ayton, Eyemouth,, Berwickshire TD14 5QX (GB)
(74) Representative: Hofmann, Andreas

(57) **Abstract**

In order to overcome the problems that earlier methods and apparatus have experienced, in particular in order to provide for a method and burner producing NOx lower than 850 mg/Nm³ at eight percent O₂ with adjustable flame shape and with higher heat transfer, it is proposed to provide oxygen enriched fuel into a combustion atmosphere (70) of a furnace (60), comprising:
- injecting a fuel stream (32, 132, 232, 332, 432, 532) into the combustion atmosphere (70); and
- providing, in particular injecting, oxygen (17, 117, 217, 317, 417, 517) into the fuel stream (32, 132, 232, 332, 432, 532) during the injecting of the fuel stream (32, 132, 232, 332, 432, 532) into the combustion atmosphere (70).

## Description

### Technical field of the present invention

The present invention basically relates to the technical field of burners and lances that provide oxygen surrounded by a gas shroud to a furnace or melter; more particularly, the present invention relates to a method for providing oxygen enriched fuel into a combustion atmosphere of a furnace and to a corresponding fluid injection apparatus.

### Technological background of the present invention

Known oxy-fuel burners use fuel and oxygen streams. Fuel injectors or burners are also used in regenerative glass melting furnaces. The burners, such as gas burners, are typically pipes or lances with single hole nozzles. Low nitrous oxide (NOx) burners were developed which provided a dual impulse type function. That is, a central conduit with a higher velocity impulse jet has an outer annular jet at a slower velocity. Distribution of the jets is controlled by either of external or internal valves or adjustments of the two nozzles for the burners.

A higher velocity impulse of the burner provides more turbulence and rapid mixing of the gases, which thus shortens the flame and accordingly provides the flame with a higher concentration of NOx. Conversely, a lower velocity impulse produces less turbulence, less mixing and therefore a longer staged burner and flame which results in lower NOx emissions.

These types of burners typically produce NOx at about or in excess of 850 mg/Nm³ at eight percent O₂, if no other NOx reduction equipment is employed. It is also common to use cooling air for off-side cooling on a non-firing side of the furnace regenerator.

### Disclosure of the present invention: object, solution, advantages

Starting from the disadvantages and shortcomings as described above and taking the prior art as discussed into account, an object of the present invention is to overcome the problems that earlier methods and apparatus have experienced, in particular to provide for a method and burner producing NOx lower than 850 mg/Nm³ at eight percent O₂ with adjustable flame shape and with higher heat transfer.

This object is accomplished by a method comprising the features of claim 1 as well as by an apparatus comprising the features of claim 10, in particular by a burner utilizing an oxygen lance for flame control and NOx reduction. Advantageous embodiments and expedient improvements of the present invention are disclosed in the respective dependent claims.

The present invention basically provides for a method of providing oxygen enriched fuel into a combustion atmosphere of a furnace including
- injecting a fuel stream into the combustion atmosphere, and
- providing oxygen into the fuel stream during the injecting of the fuel stream into the combustion atmosphere.

According to an advantageous embodiment of the present invention, the providing oxygen may comprise injecting the oxygen into the fuel stream. In combination therewith or independently thereof, the oxygen may be provided to an interior of the fuel stream.

According to a favoured embodiment of the present invention, the oxygen and the fuel can be mixed, in particular at a discharge end external to the oxygen injection apparatus.

According to an expedient embodiment of the present invention, turbulence may be created
- in the fuel stream for mixing with the oxygen, and/or
- in the oxygen for mixing with the fuel stream.

For creating the turbulence of the fuel stream, a vortex member, in particular comprising a swirler vane, may preferably be disposed in the space. In combination therewith or independently thereof, for creating the turbulence of the oxygen, a vortex member, in particular comprising a swirler vane, may preferably be disposed at an interior, in particular at an internal passageway, of the lance.

The vortex members can preferably be moved with respect to each other so as to increase or decrease an overall velocity of the flame resulting from the burner in which the fluid injection apparatus is used. It is also possible to use the vortex members so that they move in co-directions or in counter-directions with respect to each other to adjust the amount of turbulence created or mixing of the oxygen and the injected fuel.

According to an advantageous embodiment of the present invention, a flow rate of the oxygen can be adjustable for controlling a flow rate of the fuel stream to be responsive to the flow rate of the oxygen.

According to an expedient embodiment of the present invention, the injecting the fuel stream into the combustion atmosphere can occur prior to the oxygen entering the furnace. On the other hand, at least a portion of the oxygen stream may be introduced prior to injecting the gas to ensure that when the gas is introduced into the space there is a sufficient flame front established immediately external to the burner with the oxygen then fully introduced and brought up to full power into a passageway.

According to a favoured embodiment, the present invention can be used with a regenerative furnace such that the injecting the fuel stream and the providing the oxygen can occur
- beneath at least one port of said regenerative furnace, and/or
- at a side of at least one port of said regenerative furnace, and/or
- in a middle of at least one port of said regenerative furnace.

Alternatively, the present invention can preferably be used with a recuperative furnace and the injecting and the providing may occur in a recuperative burner hot air stream for said recuperative furnace.

Alternatively, the furnace may preferably be an oxy-fuel furnace and the oxygen provided to the fuel stream may be in an amount up to a hundred percent of the oxygen being provided into the fuel stream.

In other words, the inventive embodiments can be used with all types of regenerative furnaces such as for example cross-fired and end-fired furnaces; under-port, side-port and through-port; recuperative furnaces; a hundred percent oxy-fuel furnaces; and air fuel furnaces including regenerative and recuperative furnaces which are partially boosted by oxy-fuel burners.

The present invention further provides for a fluid injection apparatus for a combustion atmosphere of a furnace including
- a housing having a space therein and a discharge orifice in communication with the space,
- a lance for oxygen disposed in the space and in communication with the discharge orifice, and,
- an inlet duct for a fuel stream in communication with the space external to the lance.

According to an advantageous embodiment of the present invention, the apparatus may comprise a nozzle, in particular an injector nozzle, mounted to the housing at the discharge orifice, in particular at the distal end. The nozzle may expediently have an end portion which converges in order to reduce a size of the discharge orifice.

According to a favourable embodiment of the present invention, the lance may adjustably be moveable within the space to control a flow of the oxygen and of the fuel stream into the combustion atmosphere.

According to a preferred embodiment of the present invention, the housing may be mounted to at least one of an end wall, a sidewall, a crown, and a peep site hole of the furnace. In combination therewith or independently thereof, the discharge opening may be in communication with the combustion chamber of the furnace.

The fuel stream may be selected from the group consisting of natural gas, producer gas, coke oven gas, syngas, methane, ethane, propane, butane, pentane, low calorific biomas or any other commercially available fuel.

The present invention finally provides for the use of a method as outlined above and/or of at least one apparatus as outlined above for flame control, in particular for adjustability of the flame shape, and/or for higher heat transfer and/or for NOx reduction.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1 and on claim 10; further improvements, features and advantages of the present invention are explained below in more detail with reference to preferred embodiments by way of non-limiting example and to the appended drawing figure taken in conjunction with the following description of the embodiments, of which:
FIG. 1 shows a cross-section side view of a first embodiment of a burner lance of the present invention, said embodiment working according to the method of the present invention;
FIG. 2 shows a cross-section side view of a second embodiment of a burner lance of the present invention, said embodiment working according to the method of the present invention;
FIG. 3 shows a cross-section side view of a third embodiment of a burner lance of the present invention, said embodiment working according to the method of the present invention;
FIG. 4 shows a cross-section side view of a fourth embodiment of a burner lance of the present invention, said embodiment working according to the method of the present invention;
FIG. 5 shows a cross-section side view of a fifth embodiment of a burner lance of the present invention, said embodiment working according to the method of the present invention;
FIG. 6 shows a cross-section side view of a sixth embodiment of a burner lance of the present invention, said embodiment working according to the method of the present invention;
FIG. 7 shows a cross-section end view of a burner lance embodiment of the present invention used with a cross-fired regenerative furnace, said embodiment working according to the method of the present invention;
FIG. 8 shows a cross-section partial end view of another burner lance embodiment of the present invention used under-port of a regenerative furnace, said embodiment working according to the method of the present invention; and
FIG. 9 shows a cross-section partial end view of the burner lance embodiment of the present invention disposed off-side with respect to the regenerative furnace, said embodiment working according to the method of the present invention.

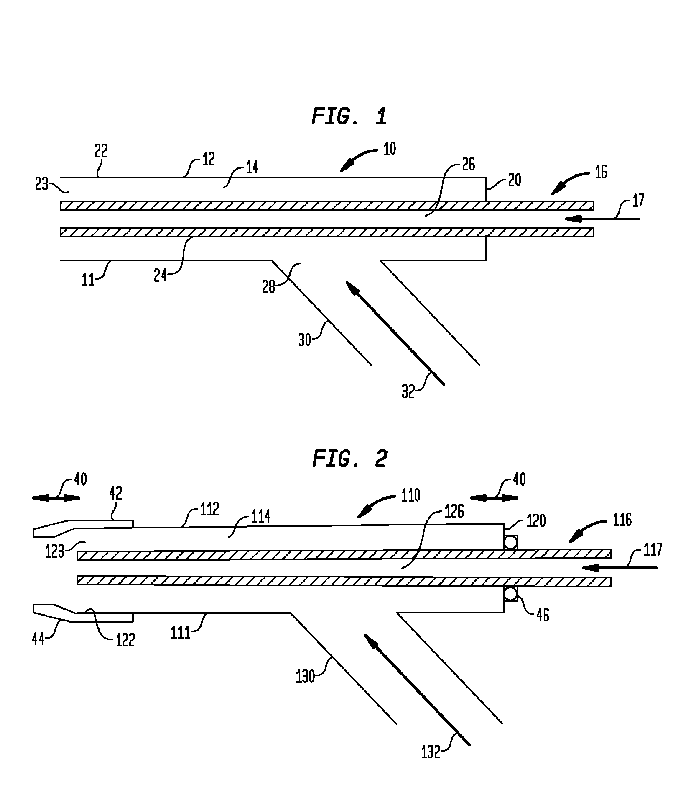

In the appended drawing figures, like equipment is labelled with the same reference numerals throughout the description of FIG. 1 to FIG. 9.

### Detailed description of the drawings; best way of embodying the present invention

Before describing the present inventive embodiments in detail, it is to be understood that the inventive embodiments are not limited in their application to the details of construction and arrangement of parts illustrated in the accompanying drawings, since the present invention is capable of other embodiments and of being practiced or carried out in various ways. Also, it is to be understood that the phraseology or terminology employed herein is for the purpose of description and not of limitation.

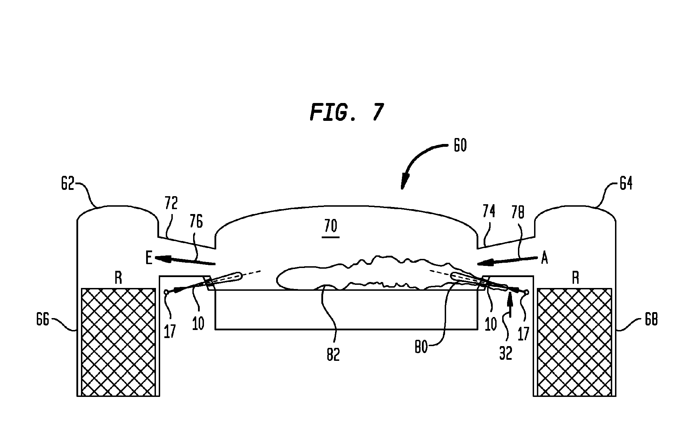

Referring to FIG. 1, an embodiment of a fuel injector with integral oxygen injector apparatus of the present invention is shown generally at 10 and which may be used with a furnace, such as for example a regenerative furnace (see FIG. 7).

The injector 10 includes a body portion 12 having a sidewall 11 defining a space 14 or passageway for a fuel, such as gas, within the body portion 12 and in which to receive an oxygen lance 16 or pipe through an end wall 20 of the body portion 12.

Another end 22 or distal end of the body portion 12 is open-ended to provide a discharge orifice 23. The space 14 extends between the end wall 20 and the distal end 22. The oxygen lance 16 includes a sidewall 24 defining an internal passageway 26 of the lance through which oxygen, as a stream for example, is provided as shown by arrow 17. A hole 28 is provided in the sidewall 11 between the end wall 20 and the distal end 22.

An inlet duct 30 or pipe is in fluid communication with the space 14 of the body portion 12 via the hole 28 so that injected gas, such as natural gas, as a fuel and indicated by arrow 32 can be introduced or injected into the space. The actual mixing of the fuel 32 and the oxygen 17 will occur at the discharge end external to the oxygen injector apparatus 10.

The injector body portion 12 can be made of steel, while the oxygen lance 16 is made of stainless steel, copper or a combination thereof. The fuel 32 can be selected from natural gas, producer gas, coke oven gas, syngas, methane, ethane, propane, butane, pentane, low calorific biomass, or any other commercially available fuel.

Referring still to FIG. 1, the apparatus 10 may be used in a regenerative furnace, for example, in either an under-port or side-port location. The oxygen stream 17 can be used to cool a tip of the body portion 12 proximate the discharge orifice 23 during a non-firing mode of the apparatus.

At the end of the furnace reversal, as the injected fuel 32 is introduced into the space 14, a flame will form rapidly at an interface of the gas and the oxygen stream 17. As the injected gas flow 32 increases above that of the flow of the oxygen 17, the flame will be surrounded by a zone of injected gas 32 which will burn in a combustion region of the furnace, similar to that which occurs with known burners.

Combustion of the oxygen 17 and gas 32 internal to the flame (but external to the apparatus 10) will create a much hotter flame that will dissociate (crack) the natural gas to form carbon soot particles and OH radicals which will increase heat transfer through improved flame luminosity and lower NOx through staged combustion in the combustion region of the furnace.

An increase in the oxygen 17 and/or a higher velocity of the oxygen will increase mixing and shortening of the flame length. Conversely, a lesser amount and/or lower velocity of the oxygen will produce a longer flame length.

The apparatus 10 provides for the flame to be external to the lance but disposed internal to a shroud of the gas 32. The oxygen 17 is injected into the fuel stream 32 and may be injected into an interior or central region of the fuel stream.

Other exemplary embodiments of the present invention are illustrated in FIG.2 to FIG.6, respectively. Elements illustrated in FIG. 2 to FIG. 6 which correspond to the elements described above with respect to FIG. 1 have been designated by corresponding reference numerals increased by 100, 200, 300, etc., respectively.

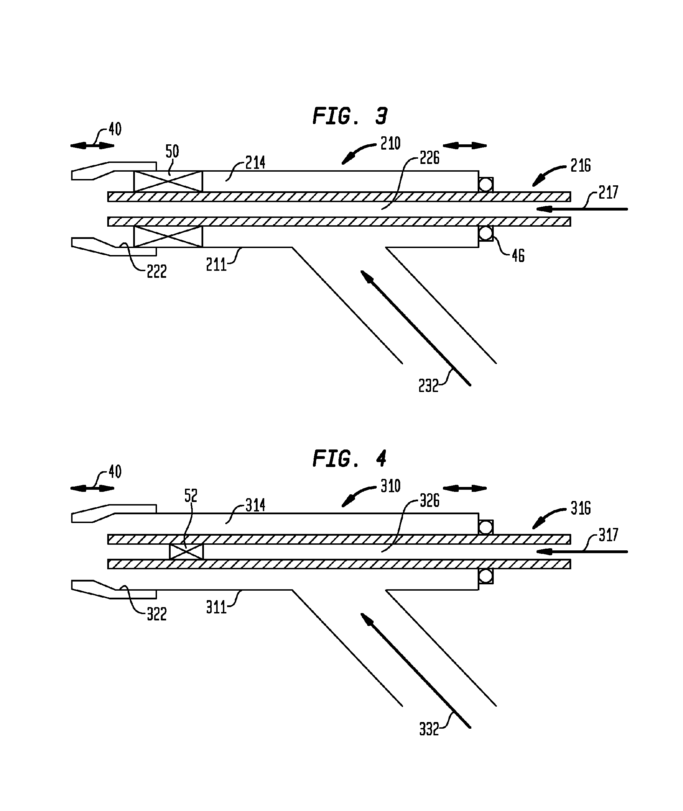

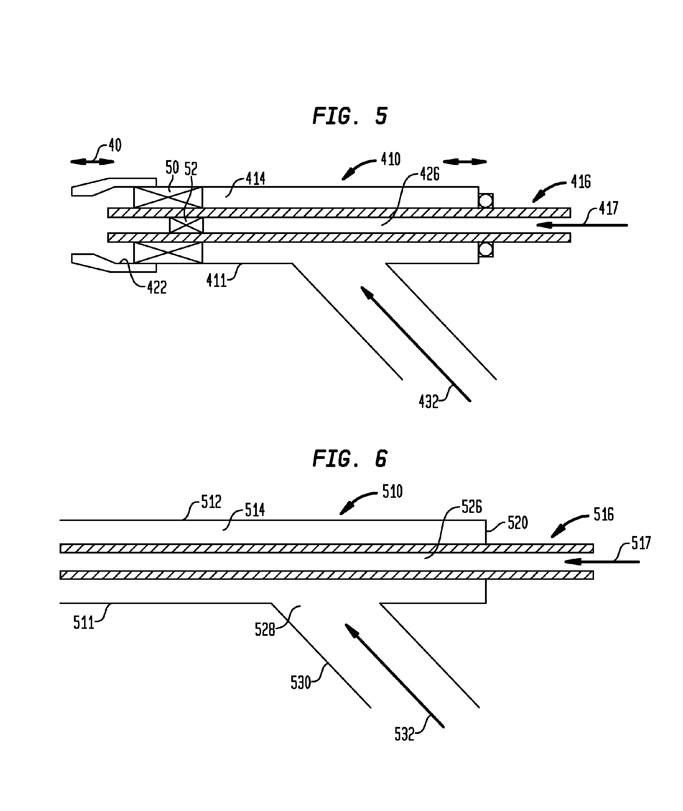

The embodiments of FIG.2 to FIG.6 are designed for use in the same manner as the embodiment of FIG. 1, unless otherwise stated. The above description regarding the features, characteristics and advantages of FIG. 1 relates - in order to avoid unnecessary repetitions and unless otherwise stated - to all respective embodiments 10 (cf. FIG. 1), 110 (cf. FIG. 2), 210 (cf. FIG. 3), 310 (cf. FIG. 4), 410 (cf. FIG. 5), and 510 (cf. FIG. 6) of the present invention.

Referring to FIG. 2, another embodiment of an oxygen injector apparatus 110 is shown. The apparatus 110 includes an injector nozzle 42 at the distal end 22. The nozzle 42 has an end portion 44 which converges as shown in FIG. 2 to reduce a size of the discharge orifice 123. The body portion 112 of the injector apparatus 110 also includes a seal 46 or gasket at the end wall 120 where the oxygen lance 116 extends through the end wall 120 into the space 114.

Still referring to FIG. 2, the oxygen lance 116 is movably positionable and adjustable with respect to the nozzle 42 which will, in effect, control the velocity of the injected gas 132. Arrows 40 represent movement of the oxygen lance 116 in the space 114. The lance 116 is movable along its longitudinal axis substantially parallel to a longitudinal axis of the body portion 112 extending along the space 114.

In FIG. 3, the oxygen injection apparatus 210 is essentially the same as that provided above in FIG. 2, with the addition of a vortex element 50 or member disposed in the space 214 to increase mixing of the injected gas 232 with the injected oxygen 217. The vortex element 50 may include a swirler vane, for example.

In FIG. 4, a vortex element 52 or member is disposed in the internal passageway 326 of the oxygen lance 316 to provide turbulence to the oxygen stream 317 to increase mixing of same with the injected gas 332. The vortex element 52 may include a swirler vane, for example.

Referring to FIG. 5, the oxygen injection apparatus 410 includes both vortex elements 50, 52 in the space 414 and the passageway 426, respectively. Such construction provides the greatest amount of turbulence to facilitate mixing the injected oxygen 417 with the injected gas 432.

The elements 50, 52 can be moved with respect to each other so as to increase or decrease an overall velocity of the flame resulting from the burner in which the apparatus is used. It is also possible to use the elements 50, 52 so that they move in co-directions or in counter-directions with respect to each other to adjust the amount of turbulence created or mixing of the oxygen and the injected gas.

The present oxygen injector apparatus can be used with a recuperative burner and can have application in glass industries, as well as secondary steel/metals or cement industries. The oxygen injector apparatus can be retrofitted to side-port and through-put regenerative furnaces.

FIG. 6 shows another embodiment of the oxygen injection apparatus shown generally at 510 and having a construction similar to that of FIG. 1, but instead delivering up to twenty percent of oxygen through the lance. In the embodiment of FIG. 6, the apparatus 510 can have up to hundred percent of the oxygen 517 surrounded by the gas 532 shroud. In effect, what is provided by the apparatus 510, as well as by the apparatus 10, 110, 210, 310, 410, is an "inside-out" burner.

Such a burner is ignited by introducing a portion of the oxygen stream 517 prior to injecting the gas 532 to ensure that when the gas is introduced into the space 514 there is a sufficient flame front established immediately external to the burner with the oxygen then fully introduced and brought up to full power into the passageway 526.

It is necessary to provide a sufficient amount of the injected gas 532 to provide for cooling of the block prior to the flame being established from the burner. A majority of the oxygen passing through the burner is consumed within the inner flame envelope. Any injected gas 532 immediately adjacent or tangential to the flame is cracked to form carbon (C) and OH radicals.

By consuming the oxygen internal to the flame the release of free radical oxygen is limited and hence the formation of NOx is also limited. By injecting and encapsulating the oxygen in the gas shroud, formation of glass foam is substantially minimized, and the carbon (soot) formation will further reduce the glass foam layer in the melt.

The injected gas 32, 132, 232, 332, 432, 532 can be provided to the oxygen stream 17, 117, 217, 317, 417, 517 prior to the oxygen stream entering a regenerator or a furnace.

The oxygen injector apparatus 10, 110, 210, 310, 410, 510 can be used individually or in combination with furnaces, such as glass melting furnaces either alone or with a regenerator(s) mounted to the furnaces.

The fuel 32, 132, 232, 332, 432, 532 can also be selected from natural gas, producer gas, coke oven gas, syngas, methane, ethane, propane, butane, pentane, low calorific biomas or any other commercially available fuel.

Referring to FIG. 7 to FIG. 9, the oxygen injector apparatus 10, 110, 210, 310, 410, 510 is shown for use with certain types of furnaces.

Referring to FIG. 7, an oxygen injector apparatus 10 is shown for use with a furnace 60, which happens to be a regenerative furnace, due to regenerators 62, 64 disposed at sidewalls of the furnace 60. A glass bath 61 or melt is at a bottom of the furnace 60.

Port 72 is in communication with and interconnects the regenerator 62 with the furnace 60, while the port 74 interconnects and is in communication with the regenerator 64 and the furnace 60. The regenerator 62 includes checker brick 66, while the regenerator 64 includes checker brick 68. The furnace 60 includes a combustion region 70 which is in fluid communication with the ports 72, 74.

By way of example, the oxygen injector apparatus 10 is shown mounted for a cross-fired application with respect to the regenerator furnace 60. Each one of the apparatus 10 provides an oxygen-gas flame front 80 which is surrounded by an air-fuel flame front 82.

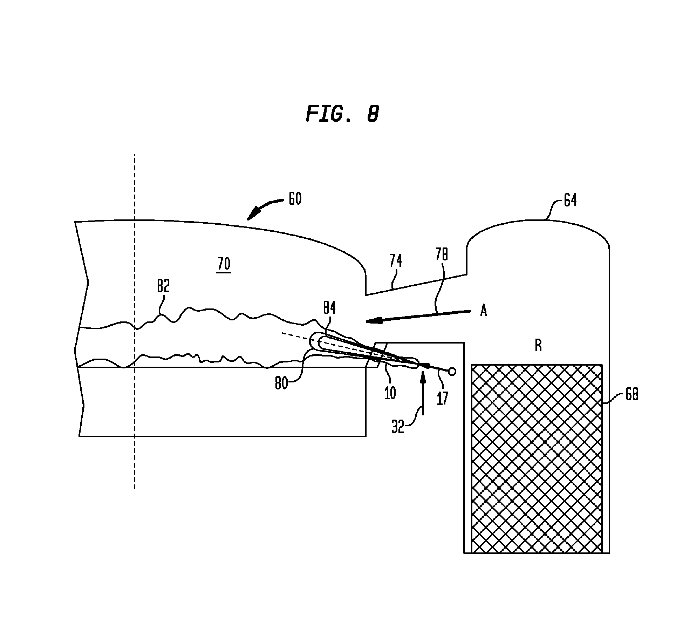

In FIG. 8, the oxygen injector apparatus 10 includes an oxygen envelope 84 surrounded by an oxygen-gas flame front 80 for providing the air-fuel flame front 82. During reversal of the regenerators 62, 64, oxygen 17 only will be flowing and upon ignition, the injected gas 32 will ignite.

The oxygen envelope 84 will be enclosed as the oxygen-gas flame front 80 increases to full flow from the apparatus 10. The present embodiment of FIG. 8 can be used with cross-fired and end-port furnaces.

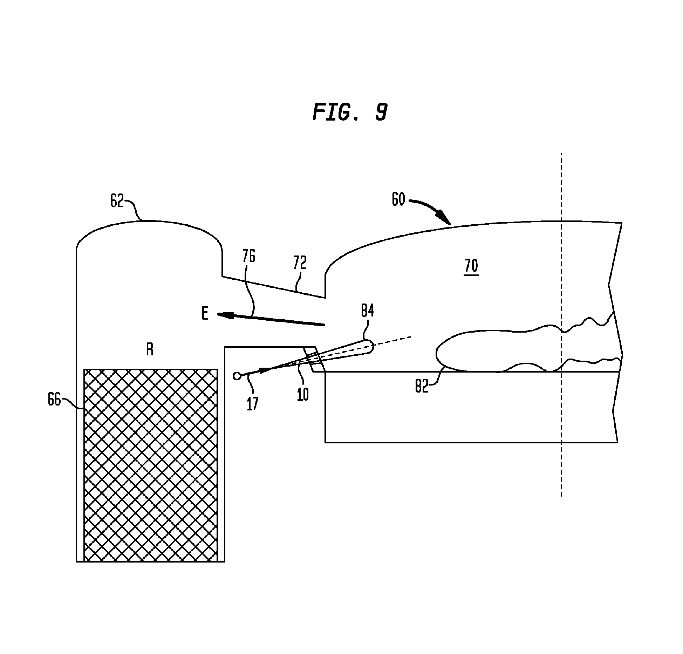

Referring to FIG. 9, there is shown the off-side firing mode of the furnace 60, wherein the oxygen injector apparatus 10 provides the oxygen envelope 84 for post-combustion of the air-fuel flame front 82.

FIG. 7 to FIG. 9 show operation in a cross-fired regenerative furnace. However the apparatus 10, 110, 210, 310, 410, 510 can also be used in an end-fired furnace under similar principals of operation.

Though referring to the oxygen injector apparatus 10 of FIG. 1, the below description regarding the features, characteristics and advantages of FIG. 7 to FIG. 9 relates - in order to avoid unnecessary repetitions and unless otherwise stated - to all respective embodiments 10 (cf. FIG. 1), 110 (cf. FIG. 2), 210 (cf. FIG. 3), 310 (cf. FIG. 4), 410 (cf. FIG. 5), and 510 (cf. FIG. 6) of the present invention.

Combustion air 78 is pre-heated by the regenerator 64. The amount of air required will be less than required in a conventional regenerator, since there are two points of additional oxygen injection 17 to the apparatus 10; one at a firing side in FIG. 8 and one at an exhaust side of FIG. 9. In a cross-fired furnace, the port fuel distribution and concentration of oxygen per port can be different.

Note that for each port 72, 74 there can be from one to four injector apparatus 10. The oxygen and fuel can therefore be profiled across the particular port with different fuel and oxygen in each burner to meet the combustion needs of the furnace 60. Depending upon the type of furnace 60 and condition of the regenerator 64 for example, varying quantities of oxygen may be provided to each port 74.

Similarly, if each port 74 has a plurality of burners (for example, four) then fuel flow profiles can also be used which would therefore call for different quantities of oxygen to be provided. On the firing side in FIG. 8, the oxygen stream 17 creates the oxygen envelope 84 which combusts to create the flame front 80 inside the main air fuel flame 82.

The flame 80 will crack and dissociate the fuel 32 to increase flame luminosity, resulting in improved heat transfer to the furnace 60 and the glass bath 61. The quantity and velocity of the oxygen 17 relative to the fuel 32 will adjust the flame mixing and a resulting shape of the flame.

Referring FIG. 9, the air-fuel flame front 82 will require oxidant to complete the combustion and this is provided via the off-side/exhaust oxygen envelope 84. The oxygen flow on the firing side can be the same as on the exhaust side. In certain applications it is desirable to have more oxygen on the firing side in order to shorten the flame.

In other applications there may be an excess of carbon monoxide and therefore it is desirable to have more oxygen on the exhaust side. This method of overall flame staging will increase heat transfer and reduce the formation of NOx when implemented. During reversal of the regenerators 62, 64 for the furnace there will be a possibility to reduce oxygen flow to a minimum in order to provide cooling of the furnace.

All of the elements of the oxygen injector apparatus 10, 110, 210, 310, 410, 510 are constructed of metal, except for the seal 46. In many applications, the injected gas 32, 132, 232, 332, 432, 532 will be provided, for example injected, into the oxygen stream 17, 117, 217, 317, 417, 517, which may also be injected, before entering into a furnace or a regenerator.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

**List of reference numerals**
- 10 to 510: fluid injection apparatus, in particular oxygen injector apparatus
- 11 to 511: sidewall
- 12 to 512: body portion or housing of fluid injection apparatus 10 to 510
- 14 to 514: space or passageway for fuel or fuel stream 32 to 532
- 16 to 516: oxygen lance or oxygen pipe
- 17 to 517: oxygen or oxygen stream
- 20 to 520: end wall of body portion 12 to 512
- 22 to 422: other end or distal end of body portion 12 to 412
- 23 to 123: discharge opening or discharge orifice
- 24: sidewall of oxygen lance or oxygen pipe 16
- 26 to 526: interior, in particular internal passageway, of oxygen lance or oxygen pipe 16 to 516
- 28 to 528: hole
- 30 to 530: inlet duct or inlet pipe
- 32 to 532: fuel or fuel stream, in particular gas or gas stream
- 40: movement of oxygen lance or oxygen pipe 116 to 416 in space or passageway 114 to 414
- 42: nozzle, in particular injector nozzle
- 44: end portion of nozzle 42
- 46: seal or gasket
- 50: vortex element or vortex member, in particular swirler vane, disposed in space or passageway 214, 414
- 52: vortex element or vortex member, in particular swirler vane, disposed in internal passageway 326, 426
- 60: furnace, in particular regenerative furnace or regenerator furnace or recuperative furnace or oxy-fuel furnace
- 61: glass bath or glass melt
- 62: first regenerator
- 64: second regenerator
- 66: checker brick of first regenerator 62
- 68: checker brick of second regenerator 64
- 70: combustion atmosphere or combustion region of furnace 60
- 72: first port
- 74: second port
- 78: combustion air
- 80: oxygen-gas flame front
- 82: air-fuel flame front
- 84: oxygen envelope, in particular off-side/exhaust oxygen envelope

## Claims

1. A method of providing oxygen enriched fuel into a combustion atmosphere (70) of a furnace (60), comprising:
- injecting a fuel stream (32, 132, 232, 332, 432, 532) into the combustion atmosphere (70); and
- providing, in particular injecting, oxygen (17, 117, 217, 317, 417, 517) into the fuel stream (32, 132, 232, 332, 432, 532) during the injecting of the fuel stream (32, 132, 232, 332, 432, 532) into the combustion atmosphere (70).

2. The method according to claim 1, further comprising mixing the oxygen (17, 117, 217, 317, 417, 517) and the fuel stream (32, 132, 232, 332, 432, 532).

3. The method according to claim 1 or 2, further comprising
- creating turbulence in the fuel stream (32, 132, 232, 332, 432, 532) for mixing with the oxygen (17, 117, 217, 317, 417, 517), and/or
- creating turbulence in the oxygen (17, 117, 217, 317, 417, 517) for mixing with the fuel stream (32, 132, 232, 332, 432, 532).

4. The method according to at least one of claims 1 to 3, further comprising adjusting a flow rate of the oxygen (17, 117, 217, 317, 417, 517) for controlling a flow rate of the fuel stream (32, 132, 232, 332, 432, 532) to be responsive to the flow rate of the oxygen (17, 117, 217, 317, 417, 517).

5. The method according to at least one of claims 1 to 4, wherein the injecting the fuel stream (32, 132, 232, 332, 432, 532) into the combustion atmosphere (70) occurs prior to the oxygen (17, 117, 217, 317, 417, 517) entering the furnace (60).

6. The method according to at least one of claims 1 to 5, wherein the providing oxygen (17, 117, 217, 317, 417, 517) is to an interior of the fuel stream (32, 132, 232, 332, 432, 532).

7. The method according to at least one of claims 1 to 6, wherein the furnace (60) is a regenerative furnace and the injecting and the providing occur beneath and/or at a side of and/or in a middle of at least one port (72, 74) of said regenerative furnace.

8. The method according to at least one of claims 1 to 7, wherein the furnace (60) is a recuperative furnace and the injecting and the providing occur in a recuperative burner hot air stream for said recuperative furnace.

9. The method according to at least one of claims 1 to 8, wherein the furnace (60) is an oxy-fuel furnace and the oxygen (17, 117, 217, 317, 417, 517) provided to the fuel stream (32, 132, 232, 332, 432, 532) is in an amount up to a hundred percent of the oxygen (17, 117, 217, 317, 417, 517) being provided into the fuel stream (32, 132, 232, 332, 432, 532).

10. A fluid injection apparatus (10, 110, 210, 310, 410, 510) for a combustion atmosphere (70) of a furnace (60), comprising:
- a housing (12, 112, 512) having a space (14, 114, 214, 314, 414, 514) therein and a discharge orifice (23, 123) in communication with the space (14, 114, 214, 314, 414, 514);
- a lance (16, 116, 216, 316, 416, 516) for oxygen (17, 117, 217, 317, 417, 517) disposed in the space (14, 114, 214, 314, 414, 514) and in communication with the discharge orifice (23, 123); and
- an inlet duct (30, 130, 530) for a fuel stream (32, 132, 232, 332, 432, 532) in communication with the space (14, 114, 214, 314, 414, 514) external to the lance (16, 116, 216, 316, 416, 516).

11. The apparatus according to claim 10, further comprising a nozzle (42) mounted to the housing (12, 112, 512) at the discharge orifice (23, 123).

12. The apparatus according to claim 10 or 11, wherein the lance (16, 116, 216, 316, 416, 516) is adjustably moveable within the space (14, 114, 214, 314, 414, 514) to control a flow of the oxygen (17, 117, 217, 317, 417, 517) and the fuel stream (32, 132, 232, 332, 432, 532) into the combustion atmosphere (70).

13. The apparatus according to at least one of claims 10 to 12, wherein the housing (12, 112, 512) is mounted to at least one of an end wall (20, 120, 520), a sidewall (11, 111, 211, 311, 411, 511), a crown, and a peep site hole of the furnace (60) and the discharge orifice (23, 123) is in communication with the combustion chamber of the furnace (60).

14. The apparatus according to at least one of claims 10 to 13, further comprising
- a vortex member (50) disposed in the space (214, 414) for creating turbulence of the fuel stream (232, 432), said vortex member (50) in particular comprising a swirler vane, and/or
- a vortex member (52) disposed at an interior (326, 426), in particular at an internal passageway, of the lance (316, 416) for creating turbulence of the oxygen (317, 417), said vortex member (52) in particular comprising a swirler vane.

15. The apparatus according to at least one of claims 10 to 14, wherein the fuel stream (32, 132, 232, 332, 432, 532) is selected from the group consisting of natural gas, producer gas, coke oven gas, syngas, methane, ethane, propane, butane, pentane, low calorific biomas or any other commercially available fuel.
